# EUROPEAN PATENT SPECIFICATION

(11) **EP 4 303 019 B1**
(45) Date of publication and mention of the grant of the patent: **27.11.2024**
(21) Application number: 23181057.3
(22) Date of filing: 22.06.2023
(51) Int. Cl.: B41J 3/407, B65B 55/10, B65G 54/02, B65B 61/26, B41J 11/06, B65B 61/24

(54) **DIGITAL PRINTING APPARATUS FOR A PACKAGING MACHNINE AND PACKAGING MACHINE HAVING A DIGITAL PRINTING APPARATUS**
DIGITALDRUCKVORRICHTUNG FÜR EINE VERPACKUNGSMASCHINE UND VERPACKUNGSMASCHINE MIT EINER DIGITALDRUCKVORRICHTUNG
APPAREIL D'IMPRESSION NUMÉRIQUE POUR MACHINE D'EMBALLAGE ET MACHINE D'EMBALLAGE DOTÉE D'UN APPAREIL D'IMPRESSION NUMÉRIQUE

(30) Priority: 07.07.2022 EP 22183602
(43) Date of publication of application: 10.01.2024
(73) Proprietor: Tetra Laval Holdings & Finance S.A., 1009 Pully (CH)
(72) Inventor: SCARABELLI, Paolo, 41123 Modena (IT); PICCININI, Giorgio, 41123 Modena (IT); ROSSI, Stefano, 41123 Modena (IT); VIOLA, Massimo, 41123 Modena (IT); FLORE, Stefano, 41123 Modena (IT)
(74) Representative: Tetra Pak - Patent Attorneys SE

(56) References cited:
- DE-A1- 102011 086 708
- DE-A1- 102020 120 290
- US-A1- 2016 207 717
- US-A1- 2018 074 478
- US-A1- 2021 073 974

## Description

### TECHNICAL FIELD

The present invention relates to a digital printing apparatus for a packaging machine of packages. In particular, the present invention relates to a digital printing apparatus for a packaging machine so as to allow for a customization of some or all of the packages produced by the packaging machine.

Advantageously, the present invention also relates to a packaging machine for the packaging of pourable products, in particular pourable food products, into packages, in particular packages formed from a multilayer packaging material, and having at least one digital printing apparatus, in particular allowing for a customization of some or all of the packages.

### BACKGROUND ART

As is known, many liquid or pourable food products, such as fruit juice, UHT (ultra-high-temperature treated) milk, wine, tomato sauce, etc., are sold in packages, in particular sealed packages, made of sterilized packaging material.

A typical example is the parallelepiped-shaped package for pourable food products known as Tetra Brik Aseptic (registered trademark), which is made by sealing and folding a laminated strip packaging material. The packaging material has a multilayer structure comprising a carton and/or paper base layer, covered on both sides with layers of heat-seal plastic material, e.g. polyethylene. In the case of aseptic packages for long-storage products, the packaging material also comprises a layer of oxygen-barrier material, e.g. an aluminum foil, which is superimposed on a layer of heat-seal plastic material, and is in turn covered with another layer of heat-seal plastic material forming the inner face of the package eventually contacting the food product. Packages of this sort are normally produced on fully automatic packaging machines, which form and fill the packages starting from a multilayer packaging material. Such automatic packaging machines come along with significant production speeds (more than 10000 packages per hour or even significantly faster).

Recently, a desire has arisen in the sector to customize the packages e.g. by applying certain information, messages, pictures or similar onto the packages.

However, the customization of the packages must not interfere with the significant processing speeds of the packaging machines.

Hence, a desire is felt in the sector to provide for packaging machines, which allow producing customized packages without the need to reduce the production speeds of the packaging machine. An example of a device for imprinting or labelling containers using planar motors can be found in document DE102020120290 A1.

### DISCLOSURE OF INVENTION

It is therefore an object of the present invention to provide in a straightforward and low-cost manner a digital printing apparatus for a packaging machine, in particular a digital printing apparatus, which allows customizing some or all of the packages produced by the packaging machine.

It is a further object of the present invention to provide in a straightforward and low-cost manner a packaging machine having a digital printing apparatus for a packaging machine, in particular a digital printing apparatus, which allows to customize some or all of the packages produced by the packaging machine.

According to the present invention, there is provided a digital printing apparatus according to the independent claim 1.

Preferred embodiments of the digital printing apparatus are claimed in the claims being directly or indirectly dependent on claim 1.

According to the present invention, there is also provided a packaging machine according to claim 14 and claim 15.

### BRIEF DESCRIPTION OF THE DRAWINGS

Two non-limiting embodiments of the present invention will be described by way of example with reference to the accompanying drawings, in which:
Figure 1 is a schematic view of a packaging machine having at least one digital printing apparatus according to the present invention, with parts removed for clarity;
Figure 2 is a schematic top view of a first embodiment of a digital printing apparatus according to the present invention, with parts removed for clarity;
Figure 3 is a perspective view of a detail of the digital printing apparatus of Figure 2, with parts removed for clarity; and
Figure 4 is a second embodiment of a digital printing apparatus according to the present invention, with parts removed for clarity.

### BEST MODES FOR CARRYING OUT THE INVENTION

Number 1 indicates as a whole a packaging machine for producing packages 2 filled with a pourable product, in particular a pourable food product, such as (pasteurized) milk, fruit juice, wine, tomato sauce, salt, sugar etc.

Packaging machine 1 may be configured to produce packages 2 filled with the pourable product and having customized information and/or messages and/or decorations.

In more detail, packaging machine 1 may be configured to produce packages 2 from a packaging material having a multilayer configuration.

In further detail, the packaging material may comprise at least one layer of fibrous material, such as e.g. a paper or cardboard, and at least two layers of heat-seal plastic material, e.g. polyethylene, interposing the layer of fibrous material in between one another. One of these two layers of heat-seal plastic material defining the inner face of main body 2 contacting the pourable product.

Moreover, the packaging material may also comprise a layer of gas- and light-barrier material, e.g. aluminum foil or ethylene vinyl alcohol (EVOH) film, in particular being arranged between one of the layers of the heat-seal plastic material and the layer of fibrous material. Preferentially, the packaging material may also comprise a further layer of heat-seal plastic material being interposed between the layer of gas- and light-barrier material and the layer of fibrous material.

In further detail, the packaging material may be provided in the form of a web 3.

Each package 2 obtained by packaging machine 1 may comprise a longitudinal seam portion and a pair of a respective first transversal sealing band and a respective second transversal sealing band, in particular arranged at opposite sides of package 2. In particular, the first transversal sealing band may define a transversal top sealing band and the second transversal sealing band may define a transversal bottom sealing band.

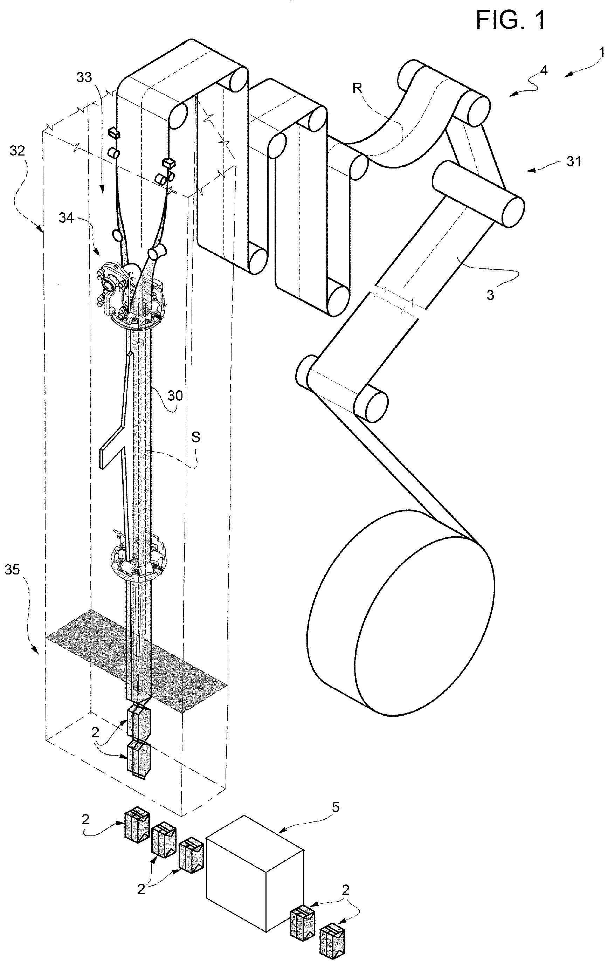

With particular reference to Figure 1, packaging machine 1 may comprise:
- a package filling apparatus 4 for filling packages 2, in particular for forming and filling packages 2, even more particular for forming packages 2 from the multilayer packaging material and filling packages 2; and
- at least one digital printing apparatus 5 for selectively printing, in particular printing information and/or messages and/or decorations, onto some or all packages 2, in particular so as to customize some or all packages 2.

In particular, digital printing apparatus 5 may be arranged downstream from packaging filing apparatus 4; i.e. digital printing apparatus 5 receives, in use, packages 2 from package filing apparatus 4.

Preferentially, digital printing apparatus 5 may be configured to selectively print a desired information, a desired message and/or a desired decoration onto some or all packages 2.

Example information and/or messages may relate to a production location, a production date and/or time, the type of product, the type of packaging material, a personalized message such as a name, a poem, one or more sentences or the like.

Moreover, the information and/or messages may be codified.

Example decorations may be pictures, photos, barcodes (2 or 3 dimensional ones) or the like.

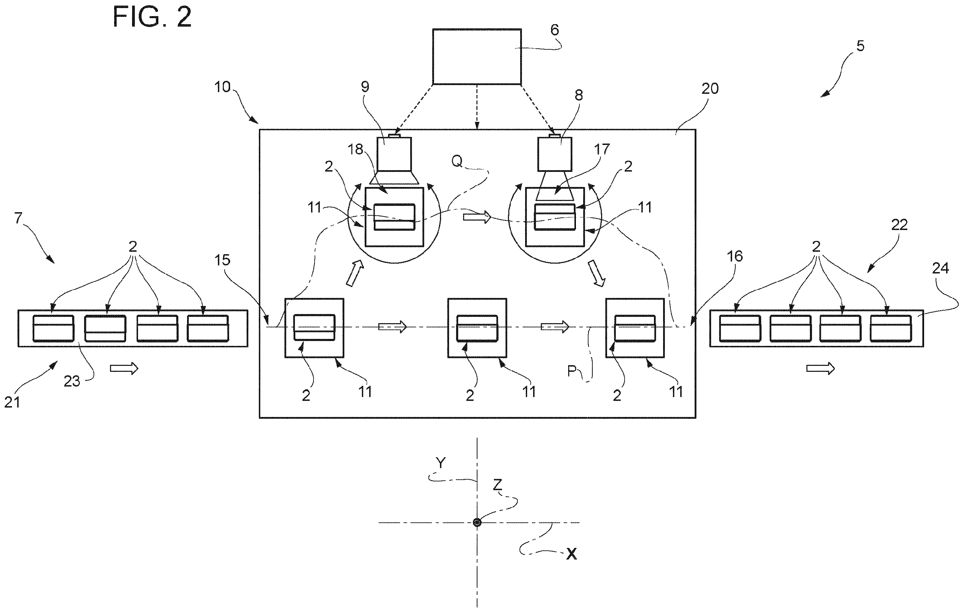

With particular reference to Figure 2, digital printing apparatus 5 comprises:
- a control unit 6 for controlling operation of digital printing apparatus 5 itself;
- a conveying device 7, in particular being operatively connected to control unit 6; and
- a digital printing unit 8 configured to print information and/or messages and/or decorations onto packages 2, in particular digital printing unit 8 being operatively connected to control unit 6.

According to the invention, digital printing apparatus 5 also comprises a scanning unit 9 configured to scan packages 2, and in particular being operatively connected to control unit 6. In particular, scanning unit 9 may be configured to scan packages 2 prior to digital printing unit 8 printing onto packages 2.

According to the invention, control unit 6 is configured to control operation of conveying device 7 so as to selectively advance packages 2 to digital printing unit 8, and in particular prior to advancing packages 2 to digital printing unit 8 also to scanning unit 9.

According to the invention, control unit 6 is configured to control operation of digital printing unit 8, in particular in order that digital printing unit 8 prints desired information and/or messages and/or decorations onto packages 2. In particular, control unit 6 may at least temporarily and digitally store the information and/or messages and/or decorations to be printed.

According to the invention, control unit 6 is configured to control operation of digital printing unit 8 in dependence of the scanning results obtained by scanning unit 9.

In more detail, conveying device 7 comprises a planar motor 10 having a plurality of carriers 11 configured to receive packages 2 at an inlet station 15 and to deliver packages 2 to an outlet station 16.

In particular, control unit 6 may be operatively connected to planar motor 10 and configured to control operation of planar motor 10, in particular movement of carriers 11.

Preferentially, control unit 6 may be configured to selectively control movement of each carrier 11.

According to the invention, control unit 6 is configured to selectively control movement of each carrier 11 independently from the other carriers 11. In this context, independently means that control unit 6 may accelerate and decelerate each carrier 11 in a selective manner, which may differ from any acceleration and deceleration of other carriers 11. Furthermore, control unit 6 may control movement of each carrier 11 such to avoid any undesired impact with the one or more other carriers 11.

Further reverting to Figure 2, digital printing unit 8 is arranged adjacent to planar motor 10 at a printing station 17.

According to the invention, unit 9 is arranged adjacent to planar motor at a scanning station 18.

Moreover, control unit 6 is configured to selectively control movement of carriers 11 so as to selectively direct at least some of the carriers 11 to printing station 17 and then to outlet station 16. Preferentially, control unit 6 is configured to selectively control movement of carriers 11 so as to selectively direct one or more of the carriers 11 to scanning station 18, then to printing station 17 and afterwards to outlet station 16.

In particular, control unit 6 is configured to control movement of carriers 11 so as to direct only these carriers 11 to printing station 17 which carry packages 2 onto which the desired information and/or messages and/or decorations are to be applied.

Additionally, control unit 6 may be configured to control movement of carriers 11 so as to direct, in particular to directly direct, these carriers 11, which carry packages 2, which do not require to receive any printing of any information and/or messages and/or decorations, to outlet station 16 (without passing through printing station 17).

In other words, control unit 6 may be configured to selectively move, in particular to directly move, carriers 11 along a first path P from inlet station 15 to outlet station 16 or along a second path Q distinct from first path Q from inlet station 15 to printing station 17, in particular from inlet station 15 to printing station 17 and through scanning station 18, and from printing station 17 to outlet station 16.

Preferentially, a first imaginary line extending from inlet station 15 to printing station 17 and a second imaginary line from printing station 17 to outlet station 16 describe and/or define an angle different from 180° or a multiple of 180°. In other words, the second path Q cannot be described by a straight line.

As schematically shown in Figure 2, digital printing unit 8 is configured to print information and/or decorations onto these packages 2, which, in use, are directed to printing station 17.

Furthermore, scanning unit 9 may be configured to scan all these packages 2 directed to scanning station 18 prior to these packages 2 being directed to printing station 17. In particular, by scanning packages 2 prior to being printed, it is possible to execute the printing with high precision and to print onto the desired portions of the respective package 2.

Preferentially, scanning unit 9 may also be configured to send the information about the scanning results about the scanned packages 2 to control unit 6.

Moreover, control unit 6 may be configured to control digital printing unit 8 in dependence of the scanning results so as to print the information and/or messages and/or decorations onto determined locations of the packages 2.

In more detail, digital printing unit 8 may comprise one or more digital printers, in particular each digital printer being operatively connected to control unit 6 such that control unit 6 may control operation of the respective digital printer.

According to some possible embodiments, the digital printers may be operated such to print the desired information and/or messages and/or decorations (substantially) contemporaneously onto different packages 2.

Alternatively or in addition, the digital printers may be operated such that the information and/or messages and/or decoration of the finalized package 2 is obtained from printing operations from different digital printers.

Each digital printer may comprise one or more printing heads.

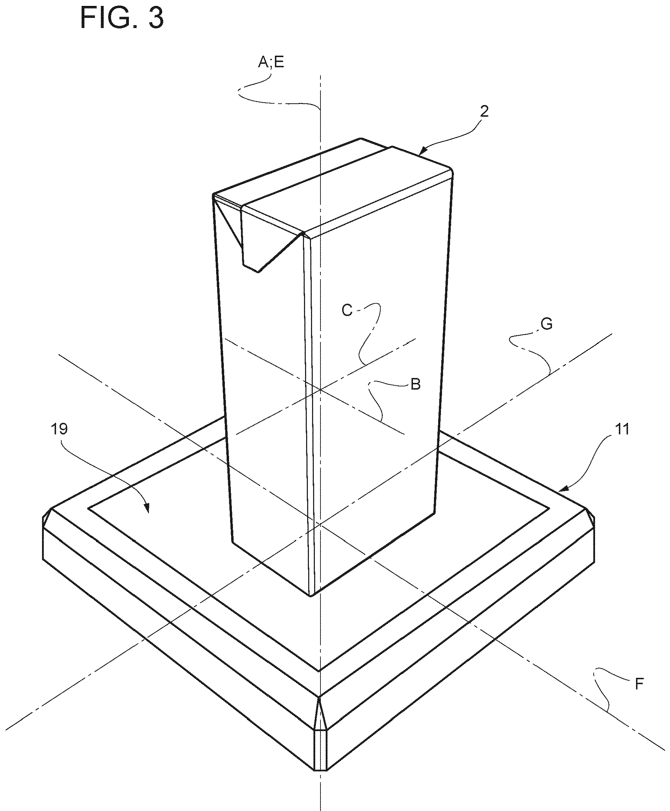

With particular reference to Figure 3, each carrier 11 may comprise a support surface 19 for carrying the respective package 2.

In particular, each package 2 may extend along a longitudinal axis A, a first transversal axis B and a second transversal axis C being perpendicular to one another. Preferentially, an extension of package 2 along longitudinal axis A may be larger than respective extensions along first transversal axis B and second transversal axis C.

Preferentially, each package 2 may be arranged on the respective carrier 11 such that the respective longitudinal axis A is transversal, in particular perpendicular, to support surface 19.

With reference to Figures 2 and 3, each carrier 11 may be configured, in particular through control by control unit 6, to rotate the respective package 2 around a rotation axis E at printing station 17, and in particular also at scanning station 18.

Preferentially, each carrier 11 is configured to rotate itself around rotation axis E for rotating the respective package 2 around rotation axis E.

In further detail, rotation axis E may be transversal, in particular substantially perpendicular, to the respective support surface 19.

More specifically, control unit 6 may be configured to control movement of each carrier 11 along three linear axes and around three rotational axes. In other words, each carrier 11 comes along with six degrees of freedom.

Even more specifically, control unit 6 may be configured to control movement of each carrier 11 along a first linear axis X, a second linear axis Y perpendicular to the first linear axis X and a third linear axis Z perpendicular to the first linear axis X and the second linear axis Y. In this way, it is possible to control the position of each carrier 11 (and therewith also of the respective packages 2) in a three-dimensional space.

Moreover, each control unit 6 may be configured to control angular movements of each carrier 11 around rotation axis E, a second rotation axis F perpendicular to rotation axis E and a third rotation axis G perpendicular to rotation axis E and second rotation axis F. This allows to control the angular positions of carriers 11 (and therewith also of the respective packages 2) .

By providing for six-degrees of freedom, it is possible to precisely control angular and spatial positions of packages 2, in particular for improving the scanning and/or printing operations.

With particular reference to Figure 2, planar motor 10 may also comprise a planar control module 20, in particular being operatively coupled to control unit 6.

Preferentially, planar control module 20 may comprise a plurality of coils configured to generate local electromagnetic fields for selectively moving carriers 11.

Control unit 6 may be configured to control the plurality of coils in order to control movement of carriers 11, in particular along first linear axis X, second linear axis Y and third linear axis Z and around rotation axis E, second rotation axis F and third rotation axis G.

More specifically, control unit 6 may be configured to control carriers 11 along third linear axis Z so as to elevate carriers 11 from planar control module 20. In particular, with the coils being powered off, carriers 11 are placed on planar control module 20.

Moreover, planar control module 20 may extend along a first axis, in particular parallel to first linear axis X, and a second axis, in particular parallel to second linear axis Y.

Advantageously, each carrier 11 may comprise at least one magnetic and/or ferromagnetic element allowing for interaction of each carrier 11 with the local electromagnetic fields generated by the coils.

The control unit 6 may be configured to selective control movement of each carrier along the first axis and first linear axis X and the second axis and the second linear axis Y by controlling the interaction of the local electromagnetic fields with the at least one magnetic and/or ferromagnetic element of each carrier 11.

With particular reference to Figure 2, conveying device 7 may also comprise:
- an inlet conveyor 21 for feeding packages 2 to inlet station 15 at which packages 2 are transferred onto the respective carriers 11; and
- an outlet conveyor 22 for receiving packages 2 at outlet station 16; in particular outlet conveyor 22 receives packages 2, in use, from the respective carriers 11.

In more detail, inlet conveyor 21 may be configured to advance packages 2 from package filling apparatus 4 to planar motor 10.

Advantageously, inlet conveyor 21 may comprise one or more infeed tracks 23, in the specific example of Figure 2 shown one.

Infeed track 23 may comprise a conveyor belt on which packages 2 are, in use, placed.

According to some possible embodiments, outlet conveyor 22 may be configured to advance packages 2 from outlet station 16 to further end-of-line processing apparatuses.

Preferentially, outlet conveyor 22 may comprise an outfeed track 24.

Outfeed track 24 may comprise a conveyor belt for advancing packages 2.

With particular reference to Figure 1, package filling apparatus 4 is configured to product packages 2 and to fill packages 2 with the pourable product.

In more detail, package filling apparatus 4 may be configured to produce packages 2 by forming a tube 30 from web 3, longitudinally sealing tube 30, filling tube 30 with the pourable product and to transversally seal and cut tube 30.

With particular reference to Figure 1, package filling apparatus 4 may comprise:
- a conveying unit 31 for advancing (in a known manner) web 3 along a web advancement path P to a forming station 8, at which, in use, web 3 is formed into tube 4;
- an isolation chamber 32 having an inner environment, in particular an inner sterile environment containing a sterile gas, and being separated from an (hostile) outer environment;

- a tube forming and sealing device 33 configured to form tube 30 from the, in use, advancing web 3 within the inner environment and to longitudinally seal tube 30 within the inner environment;
- a filling device 34 for filling tube 30 with the pourable product; and
- a package shaping unit 35 configured to shape, to transversally seal and to transversally cut the, in use, advancing tube 30 for forming packages 2.

Moreover, packaging machine 1 may also comprise a sterilizing unit configured to sterilize the, in use, advancing web 3 at a sterilization station.

In use, packaging machine 1 produces packages 2 filled with the pourable product.

Operation of packaging machine 1 comprises at least the steps of:
- filling packages 2 with the pourable product, in particular executed by of package filling apparatus 7; and
- selectively printing information and/or messages and/or decorations onto packages 2, in particular executed by digital printing apparatus 5.

Moreover, operation of packaging machine 1 may also comprise the step of forming packages 2, in particular by executed of package filling apparatus 7.

In particular, the steps of filling and forming of packages 2 may occur simultaneously.

Even more particular, during the step of forming and the step of filling, tube 30 is formed from advancing web 3, is longitudinally sealed, filled with the pourable product and transversally sealed and cut.

Preferentially, the step of printing may be executed after the step of filling, in particular after the steps of filling and forming.

According to some preferred embodiments, operation of packaging machine 1 may also comprise a step of feed, during which packages 2 are fed, in particular from package filling apparatus 7, to digital printing apparatus 5.

In more detail, during the step of selectively printing, the following sub-steps are executed:
- loading packages 2 onto respective carriers 11 at inlet station 15;
- selectively moving some or all carriers 11 to printing station 17; and
- printing information and/or messages and/or decorations onto these packages 2, which are moved to printing station 17.

Advantageously, the step of selectively printing, may also comprise a sub-step of scanning for scanning packages 2 prior to the execution of the sub-step of printing.

Preferentially, during the sub-step of selectively moving, carriers 2 (and therewith also the respective packages 2) may be at first moved to scanning station 18 and then to printing station 19.

Additionally, after the sub-step of printing, carriers 11 (and therewith also the respective packages 2) are moved to outlet station 16.

Moreover, during the step of printing, also a further sub-step of moving is executed during which some carriers 11 are moved from inlet station 15 to outlet station 16 without passing through printing station 17.

In further detail, during the sub-step of printing, any movement of carriers 11 is controlled by control unit 6 through controlling the local electromagnetic fields selectively generated by the coils.

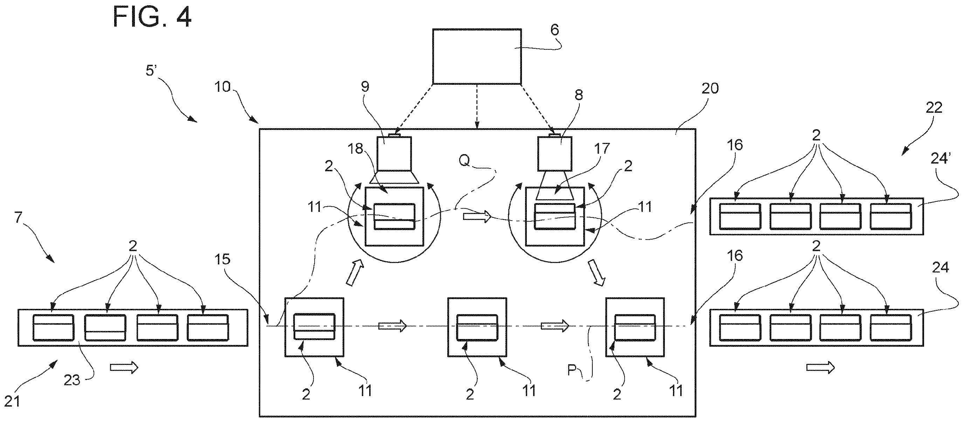

With reference to Figure 4, number 5' indicates an alternative embodiment of a digital printing apparatus according to the present invention; as digital printing apparatus 5' is similar to digital printing apparatus 5, the following description is limited to the differences between them, and using the same references, where possible, for identical or corresponding parts.

In particular, digital printing apparatus 5' differs from digital printing apparatus 5 in that outlet conveyor 22 comprises a first outfeed track 24 and a second outfeed track 24' displaced from first outfeed track 24.

Moreover, control unit 6 is configured to move carriers 11 such that packages 2 being, in use, printed by digital printing unit 8 are fed to second outfeed track 24' and packages 2 which are not, in use, being printed by digital printing unit 8 are fed to first outfeed track 24.

As operation of digital printing apparatus 5' is similar to operation of digital printing apparatus 5, the following description is limited to the differences between them.

In particular, during the step of selectively printing, the packages 2 which are printed are fed after the sub-step of printing to second outfeed track 24', while the other packages 2 which are not printed are fed to first outfeed track 24.

The advantages of digital printing apparatuses 5 and 5' and/or of packaging machine 1 according to the present invention will be clear from the foregoing description.

In particular, digital printing apparatuses 5 and 5' allow to selectively customize packages 2 without reducing the overall production speed.

Clearly, changes may be made to digital printing apparatus 5 and/or packaging machine 1 as described herein without, however, departing from the scope of protection as defined in the accompanying claims.

According to some possible non-shown embodiments, packaging machine 1 may comprise a plurality of digital printing apparatuses 5.

In particular, each digital printing apparatus 5 may be arranged such to receive a portion of the plurality of produced packages 2 and/or to print onto a portion of the overall produced packages 2.

According to one or more embodiments, each carrier 11 may receive a respective package 2, as exemplified in the figures, or a plurality of carriers 11, preferably two carriers 11, may be configured to jointly receive a package 2. That is, a single package 2 may be picked and moved through the conveying device 7 by a plurality of carriers 11.

The carriers 11 may comprise respective retaining elements configured to maintain the package 2 in a predetermined position between the carriers 11. The carriers 11 may receive the package 2 by applying pressure by means of the respective retaining elements at opposite sides of the package 2.

Advantageously, thanks to the joint movers, the conveying device may be adapted to packages 2 of different dimensions.

## Claims

1. Digital printing apparatus (5) for a packaging machine (1) producing packages (2) comprising:
- a control unit (6) for controlling the digital printing apparatus (5);
- a conveying device (7); and
- a digital printing unit (8);
- a scanning unit (9), the scanning unit (9) being arranged adjacent to the planar motor (10) at a scanning station (18) and configured to scan the packages (2);
wherein the conveying device (7) comprises a planar motor (10) having a plurality of carriers (11) configured to receive packages (2) at an inlet station (15) and to deliver the packages (2) to an outlet station (16);
wherein the digital printing unit (8) is arranged at a printing station (17);
wherein the control unit (6) is configured to selectively control movement of the carriers (11) so as to selectively direct one or more carriers (11) to the printing station (17) and afterwards to the outlet station (17), wherein the control unit (6) is configured to selectively control movement of each carrier (11) independently from the other carriers (11);
wherein the digital printing unit (8) is configured to print information and/or messages and/or decorations onto the packages (2) directed to the printing station (17),
wherein the control unit (6) is configured to selectively control movement of each one of the carriers (11) so as to selectively direct the carrier (11) to the scanning station (18), then to the printing station (17) and afterwards to the outlet conveyor (16); and
wherein the control unit (6) is configured to control operation of the digital printing unit (8) in dependence of the scanning results obtained by the scanning unit (9) .

2. Digital printing apparatus according to claim 1, wherein each carrier (11) is configured to receive a respective package (2) or wherein a plurality of carriers (11), preferably two carriers (11), jointly receives a package (2).

3. Digital printing apparatus according to any of the previous claims, wherein each carrier (11) is configured to rotate the package (2) around a rotation axis (E) at the scanning station (18).

4. Digital printing apparatus according to any one of the preceding claims, wherein the control unit (6) is configured to control movement of the carriers (11) along three linear axes and around three rotational axes.

5. Digital printing apparatus according to any one of the preceding claims, wherein the control unit (6) is configured to selectively move the carriers (11) along a first path (P) from the inlet station (15) to the outlet station (16) or along a second path (Q) from the inlet station (15) to the printing station (17) and from the printing station (17) to the outlet station (16).

6. Digital printing apparatus according to any one of the preceding claims, wherein a first imaginary line extending from the inlet station (15) to the printing station (17) and a second imaginary line from the printing station (17) to the outlet station (16) describe and/or define an angle different from 180° or a multiple of 180°.

7. Digital printing apparatus according to any one of the preceding claims, wherein the planar motor (10) comprises a planar control module (20) comprising a plurality of coils configured to generate local electromagnetic fields for selectively moving the carriers (11);
wherein each carrier (11) comprises at least one magnetic and/or ferromagnetic element;
wherein the planar control module (20) extends along a first axis and a second axis;
wherein the control unit (6) is configured to selective control movement of each carrier (11) along the first axis (X) and the second axis (Y) by controlling the interaction of the local electromagnetic fields with the at least one magnetic and/or ferromagnetic element of each carrier.

8. Digital printing apparatus according to any one of the preceding claims, wherein the conveying device (7) also comprises:
- an inlet conveyor (21) for feeding the packages (2) to the inlet station (15); and
- an outlet conveyor (22) for receiving the packages (2) at the outlet station (16).

9. Digital printing apparatus according to claim 8, wherein the outlet conveyor (22) comprises a first outfeed track (24) and a second outfeed track (24') displaced from the first outfeed track (24).

10. Digital printing apparatus according to claim 9, wherein the control unit (6) is configured to move the carriers (11) such that these packages (2) being, in use, printed by the digital printing unit (8) are fed to the second outfeed track (24') and the packages (2) which are not, in use, being printed by the digital printing unit (8) are fed to the first outfeed track (24).

11. Digital printing apparatus according to any one of the preceding claims, wherein the digital printing unit (8) comprises a plurality of digital printers.

12. Digital printing apparatus according to any one of the preceding claims, wherein each carrier (11) comprises a support surface (19) configured to carry the respective package (2).

13. Packaging machine (1) for producing packages (2) filled with a pourable product comprising:
- a package filling apparatus (4) for filling the packages (2) with the pourable product; and
- at least one digital printing apparatus (5) according to any one of the preceding claims.

14. Packaging machine according to claim 13, wherein the package filling apparatus (4) is configured to fill and produce the packages (2) from a multilayer packaging material.

## Patentansprüche

1. Digitaldruckvorrichtung (5) für eine Verpackungsmaschine, die Verpackungen (2) erzeugt, umfassend:
- eine Steuereinheit (6) zum Steuern der Digitaldruckvorrichtung (5),
- eine Fördervorrichtung (7) und
- eine Digitaldruckeinheit (8),
- eine Abtasteinheit (9), wobei die Abtasteinheit (9) benachbart zu dem planaren Motor (10) an einer Abtaststation (18) angeordnet und dazu ausgelegt ist, die Verpackungen (2) abzutasten,
wobei die Fördervorrichtung (7) einen planaren Motor (10) umfasst, der eine Vielzahl von Trägern (11) aufweist, die dazu ausgelegt sind, Verpackungen (2) an einer Einlassstation (15) aufzunehmen und die Verpackungen (2) einer Auslassstation (16) zuzuführen,
wobei die Digitaldruckeinheit (8) an einer Druckstation (17) angeordnet ist,
wobei die Steuereinheit (6) dazu ausgelegt ist, die Bewegung der Träger (11) selektiv so zu steuern, dass sie einen oder mehrere Träger (11) selektiv zu der Druckstation (17) und danach zu der Auslassstation (17) leitet, wobei die Steuereinheit (6) dazu ausgelegt ist, die Bewegung jedes Trägers (11) unabhängig von den anderen Trägern (11) selektiv zu steuern,
wobei die Digitaldruckeinheit (8) dazu ausgelegt ist, Informationen und/oder Hinweise und/oder Dekorationselemente auf die Verpackungen (2), die zu der Druckstation (17) geleitet werden, zu drucken,
wobei die Steuereinheit (6) dazu ausgelegt ist, die Bewegung jedes einzelnen Trägers (11) selektiv so zu steuern, dass sie den Träger (11) selektiv zu der Abtaststation (18), dann zu der Druckstation (17) und danach zu dem Auslassförderer (16) leitet, und
wobei die Steuereinheit (6) dazu ausgelegt ist, den Betrieb der Digitaldruckeinheit (8) in Abhängigkeit von den Abtastergebnissen, die die Abtasteinheit (9) erhält, zu steuern.

2. Digitaldruckvorrichtung nach Anspruch 1, wobei jeder Träger (11) dazu ausgelegt ist, eine entsprechende Verpackung (2) aufzunehmen, oder wobei eine Vielzahl von Trägern (11), vorzugsweise zwei Träger (11), gemeinsam eine Verpackung (2) aufnehmen.

3. Digitaldruckvorrichtung nach einem der vorhergehenden Ansprüche, wobei jeder Träger (11) dazu ausgelegt ist, die Verpackung (2) um eine Drehachse (E) an der Abtaststation (18) zu drehen.

4. Digitaldruckvorrichtung nach einem der vorhergehenden Ansprüche, wobei die Steuereinheit (6) dazu ausgelegt ist, die Bewegung der Träger (11) entlang drei linearen Achsen und um drei Drehachsen herum zu steuern.

5. Digitaldruckvorrichtung nach einem der vorhergehenden Ansprüche, wobei die Steuereinheit (6) dazu ausgelegt ist, die Träger (11) selektiv entlang einem ersten Weg (P) von der Einlassstation (15) zu der Auslassstation (16) oder entlang einem zweiten Weg (Q) von der Einlassstation (15) zu der Druckstation (17) und von der Druckstation (17) zu der Auslassstation (16) zu bewegen.

6. Digitaldruckvorrichtung nach einem der vorhergehenden Ansprüche, wobei eine erste imaginäre Linie, die sich von der Einlassstation (15) zu der Druckstation (17) erstreckt, und eine zweite imaginäre Linie, die sich von der Druckstation (17) zu der Auslassstation (16) erstreckt, einen Winkel beschreiben und/oder definieren, der sich von 180° oder einem Vielfachen von 180° unterscheidet.

7. Digitaldruckvorrichtung nach einem der vorhergehenden Ansprüche, wobei der planare Motor (10) ein planares Steuermodul (20) umfasst, das eine Vielzahl von Spulen umfasst, die dazu ausgelegt sind, lokale elektromagnetische Felder zu erzeugen, um die Träger (11) selektiv zu bewegen,
wobei jeder Träger (11) wenigstens ein magnetisches und/oder ferromagnetisches Element umfasst,
wobei sich das planare Steuermodul (20) entlang einer ersten Achse und einer zweiten Achse erstreckt,
wobei die Steuereinheit (6) dazu ausgelegt ist, die Bewegung jedes Trägers (11) entlang der ersten Achse (X) und der zweiten Achse (Y) selektiv zu steuern, indem sie das Zusammenwirken der lokalen elektromagnetischen Felder mit dem wenigstens einen magnetischen und/oder ferromagnetischen Element jedes Trägers steuert.

8. Digitaldruckvorrichtung nach einem der vorhergehenden Ansprüche, wobei die Fördervorrichtung (7) außerdem Folgendes umfasst:
- einen Einlassförderer (21) zum Transportieren der Verpackungen (2) zu der Einlassstation (15) und
- einen Auslassförderer (22) zum Aufnehmen der Verpackungen (2) an der Auslassstation (16).

9. Digitaldruckvorrichtung nach Anspruch 8, wobei der Auslassförderer (22) eine erste Auslaufspur (24) und eine zweite Auslaufspur (24'), die von der ersten Auslaufspur (24) versetzt ist, umfasst.

10. Digitaldruckvorrichtung nach Anspruch 9, wobei die Steuereinheit (6) dazu ausgelegt ist, die Träger (11) auf eine solche Weise zu bewegen, dass diese Verpackungen (2), die im Gebrauch von der Digitaldruckeinheit (8) bedruckt werden, zu der zweiten Auslaufspur (24') transportiert werden, und die Verpackungen (2), die im Gebrauch nicht von der Digitaldruckeinheit (8) bedruckt werden, zu der ersten Auslaufspur (24) transportiert werden.

11. Digitaldruckvorrichtung nach einem der vorhergehenden Ansprüche, wobei die Digitaldruckeinheit (8) eine Vielzahl von digitalen Druckern umfasst.

12. Digitaldruckvorrichtung nach einem der vorhergehenden Ansprüche, wobei jeder Träger (11) eine Auflagefläche (19) umfasst, die dazu ausgelegt ist, die entsprechende Verpackung (2) zu tragen.

13. Verpackungsmaschine (1) zum Erzeugen von Verpackungen (2), die mit einem fließfähigen Produkt gefüllt sind, umfassend:
- eine Verpackungsbefüllungsvorrichtung (4) zum Befüllen der Verpackungen (2) mit dem fließfähigen Produkt und
- wenigstens eine Digitaldruckvorrichtung (5) nach einem der vorhergehenden Ansprüche.

14. Verpackungsmaschine nach Anspruch 13, wobei die Verpackungsbefüllungsvorrichtung (4) dazu ausgelegt ist, die Verpackungen (2) zu befüllen und sie aus einem mehrschichtigen Verpackungsmaterial zu erzeugen.

## Revendications

1. Appareil d'impression numérique (5) pour une machine de conditionnement (1) produisant des conditionnements (2), comprenant :
- une unité de commande (6) destinée à commander l'appareil d'impression numérique (5) ;
- un dispositif de transport (7) ; et
- une unité d'impression numérique (8) ;
- une unité de balayage (9), l'unité de balayage (9) étant agencée de façon adjacente au moteur plan (10) au niveau d'une station de balayage (18) et configurée pour effectuer un balayage des conditionnements (2) ;
dans lequel le dispositif de transport (7) comprend un moteur plan (10) ayant une pluralité d'organes porteurs (11) configurés pour recevoir des conditionnements (2) au niveau d'une station d'entrée (15) et pour livrer les conditionnements (2) à une station de sortie (16) ;
dans lequel l'unité d'impression numérique (8) est agencée au niveau d'une station d'impression (17) ;
dans lequel l'unité de commande (6) est configurée pour commander sélectivement le mouvement des organes porteurs (11) afin de diriger sélectivement un ou plusieurs organes porteurs (11) vers la station d'impression (17) et après cela vers la station de sortie (17), dans lequel l'unité de commande (6) est configurée pour commander sélectivement le mouvement de chaque organe porteur (11) indépendamment des autres organes porteurs (11) ;
dans lequel l'unité d'impression numérique (8) est configurée pour imprimer des informations et/ou des messages et/ou des décorations sur les conditionnements (2) dirigés vers la station d'impression (17),
dans lequel l'unité de commande (6) est configurée pour commander sélectivement le mouvement de chacun des organes porteurs (11) afin de diriger sélectivement l'organe porteur (11) vers la station de balayage (18), puis vers la station d'impression (17) et après cela vers le transporteur de sortie (16) ; et
dans lequel l'unité de commande (6) est configurée pour commander le fonctionnement de l'unité d'impression numérique (8) en fonction des résultats de balayage obtenus par l'unité de balayage (9).

2. Appareil d'impression numérique selon la revendication 1, dans lequel chaque organe porteur (11) est configuré pour recevoir un conditionnement respectif (2) ou dans lequel une pluralité d'organes porteurs (11), de préférence deux organes porteurs (11), reçoivent conjointement un conditionnement (2).

3. Appareil d'impression numérique selon de quelconques des revendications précédentes, dans lequel chaque organe porteur (11) est configuré pour mettre en rotation le conditionnement (2) autour d'un axe de rotation (E) au niveau de la station de balayage (18).

4. Appareil d'impression numérique selon l'une quelconque des revendications précédentes, dans lequel l'unité de commande (6) est configurée pour commander le mouvement des organes porteurs (11) le long de trois axes linéaires et autour de trois axes de rotation.

5. Appareil d'impression numérique selon l'une quelconque des revendications précédentes, dans lequel l'unité de commande (6) est configurée pour mettre sélectivement en mouvement les organes porteurs (11) le long d'un premier chemin (P) depuis la station d'entrée (15) jusqu'à la station de sortie (16) ou le long d'un second chemin (Q) depuis la station d'entrée (15) jusqu'à la station d'impression (17) et depuis la station d'impression (17) jusqu'à la station de sortie (16).

6. Appareil d'impression numérique selon l'une quelconque des revendications précédentes, dans lequel une première ligne imaginaire s'étendant depuis la station d'entrée (15) jusqu'à la station d'impression (17) et une seconde ligne imaginaire depuis la station d'impression (17) jusqu'à la station de sortie (16) décrivent et/ou définissent un angle différent de 180 ° ou un multiple de 180 °.

7. Appareil d'impression numérique selon l'une quelconque des revendications précédentes, dans lequel le moteur plan (10) comprend un module de commande plan (20) comprenant une pluralité de bobines configurées pour générer des champs électromagnétique locaux pour mettre sélectivement en mouvement les organes porteurs (11) ;
dans lequel chaque organe porteur (11) comprend au moins un élément magnétique et/ou ferromagnétique ;
dans lequel le module de commande plan (20) s'étend le long d'un premier axe et d'un second axe ;
dans lequel l'unité de commande (6) est configurée pour commander sélectivement le mouvement de chaque organe porteur (11) le long du premier axe (X) et du second axe (Y) en commandant l'interaction des champs électromagnétique locaux avec l'au moins un élément magnétique et/ou ferromagnétique de chaque organe porteur.

8. Appareil d'impression numérique selon l'une quelconque des revendications précédentes, dans lequel le dispositif de transport (7) comprend également :
- un transporteur d'entrée (21) pour effectuer l'alimentation des conditionnements (2) à la station d'entrée (15) ; et
- un transporteur de sortie (22) pour recevoir les conditionnements (2) au niveau de la station de sortie (16).

9. Appareil d'impression numérique selon la revendication 8, dans lequel le transporteur de sortie (22) comprend une première voie d'alimentation en sortie (24) et une seconde voie d'alimentation en sortie (24') déplacée par rapport à la première voie d'alimentation en sortie (24).

10. Appareil d'impression numérique selon la revendication 9, dans lequel l'unité de commande (6) est configurée pour mettre en mouvement les organes porteurs (11) de manière telle que l'alimentation de ces conditionnements (2), qui sont, durant l'utilisation, imprimés par l'unité d'impression numérique (8), est effectuée à la seconde voie d'alimentation en sortie (24') et l'alimentation des conditionnements (2), qui ne sont pas, durant l'utilisation, imprimés par l'unité d'impression numérique (8), est effectuée à la première voie d'alimentation en sortie (24).

11. Appareil d'impression numérique selon l'une quelconque des revendications précédentes, dans lequel l'unité d'impression numérique (8) comprend une pluralité d'imprimantes numériques.

12. Appareil d'impression numérique selon l'une quelconque des revendications précédentes, dans lequel chaque organe porteur (11) comprend une surface de support (19) configurée pour porter le conditionnement respectif (2).

13. Machine de conditionnement (1) pour produire des conditionnements (2) remplis avec un produit versable comprenant :
- un appareil de remplissage de conditionnement (4) destiné à remplir les conditionnements (2) avec le produit versable ; et
- au moins un appareil d'impression numérique (5) selon l'une quelconque des revendications précédentes.

14. Machine de conditionnement selon la revendication 13, dans lequel l'appareil de remplissage de conditionnement (4) est configuré pour remplir et produire les conditionnements (2) à partir d'un matériau de conditionnement multicouche.
